# EUROPÄISCHE PATENTANMELDUNG

(11) **EP 2 423 247 A1**
(43) Veröffentlichungstag der Anmeldung: **29.02.2012**
(21) Anmeldenummer: 11177952.6
(22) Anmeldetag: 18.08.2011
(51) Int. Cl.: C08J 5/06, C08K 5/29, C09J 161/12, D06M 15/41

(54) **Neuartige wässrige Resorcin-Formaldehyd-Latex-Dispersionen, ein Verfahren zu deren Herstellung und deren Verwendung**

(30) Priorität: 30.08.2010 EP 10174547; 16.03.2011 EP 11158503
(71) Anmelder: Rhein Chemie Rheinau GmbH, 68219 Mannheim (DE)
(72) Erfinder: Laufer, Wilhelm, 67158 Ellerstadt (DE); Austmann, Henning, 01069 Dresden (DE); Schuster, Peter, 6487 Göschenen (CH); Palzer, André, 68782 Brühl (DE)
(74) Vertreter: Siegers, Britta

(57) **Zusammenfassung**

Die vorliegenden Erfindung betrifft neuartige wässrige Resorcin-Formaldehyd-Latex-Dispersionen, enthaltend mindestens ein oberflächendesaktiviertes Diisocyanat. ein Verfahren zu deren Herstellung und deren Verwendung zur Haftungsverbesserung im Reifen.

## Beschreibung

Die vorliegenden Erfindung betrifft neuartige wässrige Resorcin-Formaldehyd-Latex-Dispersionen, enthaltend mindestens ein oberflächendesaktiviertes Diisocyanat, ein Verfahren zu deren Herstellung und deren Verwendung zur Haftungsverbesserung im Reifen.

Resorcin-Formaldehyd-Latex-Dispersionen (RFL-Dip) haben sich insbesondere im Reifenbereich durchgesetzt, da diese die Haftung des Kunststoffgewebes (Cord) zum Gummi verbessern.

Im Fall von Polyester als Cord-Material besteht jedoch der Nachteil, dass die haftungsvermittelnden Eigenschaften des RFL-Dips nicht ausreichend sind.

Es wurde daher versucht, durch Zugabe von dimeren Isocyanaten diesen Nachteil zu beseitigen, was allerdings an der geringen Performance und der geringere Lagerstabilität scheiterte.

Um die Haftung bei der Verwendung von Polyester-Cord zum Reifen/Gummi zu verbessern, werden dem RFL-Dip mit Caprolactamen geblockte Isocyanate zugesetzt (siehe US A 20080300347). Diese haben wiederum den Nachteil, dass im weiteren Prozeß störendes Caprolactam abgespalten wird.

Des Weiteren ist aus EP-A 2159241 der Einsatz von mikroverkapseltem dimerem Diphenylmethan-4,4'-diisocyanat und Diphenylmethan-2,4-diisocyanat (MDI) zur Verbesserung der haftungsvermittelnden Eigenschaften bekannt. Die hier beschriebenen Substanzen haben jedoch die Nachteile, dass sie nur bei Temperaturen > 200°C wirksam sind, hohe Konzentrationen notwendig sind, diese teuer und kommerziell nicht verfügbar sind.

Aufgabe der vorliegenden Erfindung war daher, wässrige Resorcin-Formaldehyd-Latex-Dispersionen bereitzustellen, die die Nachteile des Standes der Technik nicht aufweisen.

Überraschenderweise wurde nun gefunden, dass wässrige Resorcin-Formaldehyd-Latex-Dispersionen, enthaltend mindestens ein oberflächendesaktiviertes Diisocyanat auf Basis von Toluol-2,4-diisocyanat (TDI) oder substitutiertem TDI eine exzellente Haftung selbst in geringen Konzentrationen gewährleistet.

Gegenstand der vorliegenden Erfindung sind daher wässrige Resorcin-Formaldehyd-Latex-Dispersionen, enthaltend mindestens ein Diisocyanat gemäß Formel (I) 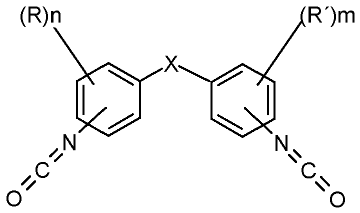 mit X= 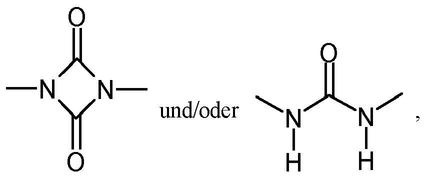 wobei n, m gleich oder verschieden sein können und 1,2,3 oder 4 entsprechen und R und R' gleich oder verschieden sein können und C₁-C₄-Alkyl bedeuten,
welches mit mindestens einem Amin oberflächendesaktiviert wurde.

In einer besonderen Ausführungsform der Erfindung handelt es sich bei dem Diisocyanat um eine Verbindung der Formel (II) 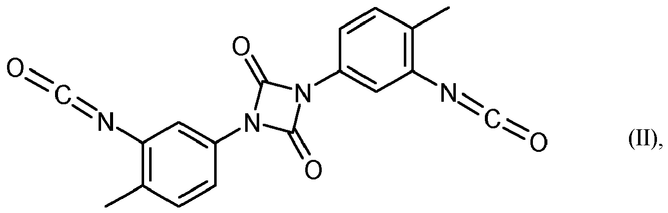 die mit mindestens einem Amin oberflächendesaktiviert wurde.

In einer anderen, ebenfalls bevorzugten Ausführungsform der Erfindung handelt es sich bei dem Diisocyanat um eine Verbindung der Formel (III) 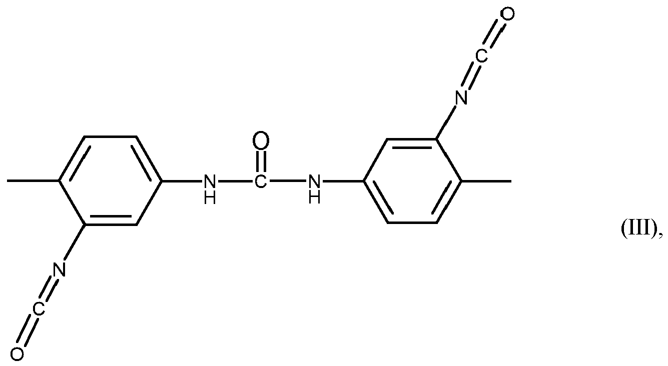 welche mit mindestens einem Amin oberflächendesaktiviert wurde.

Die Diisocyanate nach Formel (I) sind kommerziell erhältlich oder lassen sich nach den, dem Fachmann geläufigen Verfahren, wie z.B. beschrieben in J. Prakt. Chem. 1999, 341, no. 7, herstellen.

Die Diisocyanate nach Formel (II) und sind kommerziell erhältlich, z.B. bei der Firma Rhein Chemie Rheinau GmbH unter dem Namen Addolink® TT oder Rhenocure® TT.

Die Diisocyanate nach Formel (III) können nach dem im Stand der Technik bekannten Verfahren, wie z.B. in DE-A-3438527 beschrieben, hergestellt werden.

Die eingesetzten Diisocyanate sind vorzugsweise fest und weisen besonders bevorzugt eine Teilchengröße von < 50 µm auf.

Für die Oberflächendesaktivierung (Mikroverkapselung) sind als Amin alle aminofunktionellen Verbindungen einsetzbar. Bevorzugt handelt es sich dabei um multifunktionelle primäre und sekundäre, besonders bevorzugt multifunktionelle aliphatische Amine. Erfindungsgemäß geeignete Amine sind insbesondere ausgewählt aus der Gruppe von cyclischen und aliphatischen, geradkettigen oder verzweigten (C₂-C₁₄)-Alkylaminen, -diaminen und -polyaminen, insbesondere (C₂ C₁₀)-Alkylaminen, -diaminen und -polyaminen, vorzugsweise (C₂-C₆)-Alkylaminen, -diaminen und - polyaminen, wobei die Alkylkette zumindest teilweise oder aber vollständig durch Heteroatome, insbesondere Sauerstoff oder Schwefel, unterbrochen sein kann und/oder wobei die Alkylkette weitere Substituenten, wie beispielsweise Hydroxylgruppen, Carboxylgruppen, Halogen oder dergleichen enthalten kann.

Als Beispiele für erfindungsgemäß geeignete Amine lassen sich die folgenden Verbindungen nennen: 2-Pentamethylen-1,5-diamin und dessen Isomere und Homologe wie z.B. 1,6-Hexamethylendiamin; Di-sek.-Butylamin; Ethylendiamin; 1,3-Propylendiamin; Diethylen-triamin; Triethylentetramin; 3,3'-Dimethyl-4,4'-diaminodicyclohexylmethan; Methylnonandiamin; Isophorondiamin; 4,4'-Diaminodicyclohexylmethan; Alkanolamine und -diamine, wie Ethanolamin und Diethanolamin und/oder Amidoamine. Hierunter ganz besonders bevorzugt sind das 2-Methyl-Pentamethylen-1,5-diamin und dessen Isomere und Homologe, wie z. B. 1,6-Hexamethylendiamin.

Besonders bevorzugt handelt es sich dabei um multifunktionelle primäre und sekundäre, besonders bevorzugt multifunktionelle aliphatische Amine, wie z.B. Jeffamine® T 403 der Firma Huntsmann, Diisopropanolamin der Firma BASF AG oder Amidoamine, wie Versamid® 140 der Firma Cognis oder Euretek 505 der Firma Witco. Dabei handelt es sich insbesondere um Verbindungen mit hydrophilen Gruppen, wie insbesondere Aminogruppen oder Hydroxylgruppen, die mit den freien Isocyanatgruppen des festen Diisocyanats reagieren können und somit eine Oberflächenhülle auf den Isocyanaten ausbilden, welche die Isocyanate zunächst desaktiviert, so z.B. Amine, Diamine und Polyamine.

In einer bevorzugten Ausführungsform der Erfindung wird als Oberflächendesaktivierungsmittel ein niedermolekulares Mono-, Di- oder Polyamin mit einer oder mehreren primären und/oder sekundären Aminogruppe(n) verwendet, und zwar in solchen Mengen, dass der Desaktivierungsgrad (DG), berechnet als Äquivalentverhältnis von Aminogruppen des Oberflächendesaktivierungsmittels zu den Isocyanatgruppen des zu desaktivierenden Isocyanats (n NH₂/n NCO), zwischen 0,9 und 5 Äquivalent-% liegt.

Insbesondere kann das Oberflächendesaktivierungsmittel ein Molekulargewicht MG 600 g/mol aufweisen.

Dabei sind Konzentrationen an Oberflächendesaktivierungsmittel (Amin), bezogen auf die Menge an Diisocyanat, von 1 bis 10 Gew.% bevorzugt, insbesondere bevorzugt 2 bis 5 Gew.%.

Die Oberflächendesaktivierung erfolgt vorzugsweise durch Zugabe des Amins zu einer wässrigen Dispersion des Diisocyanats, das gegebenenfalls noch Dispergiermittel und Antiabsatzmittel enthält, unter Rühren und/oder Vermahlen. Es ist aber auch möglich, die Oberflächendesaktivierung durch Zugabe des Amins in eine organische Dispersion des Diisocyanats, z.B. in Alkohol, Toluol, etc., durchzuführen.

Für den Rühr-/Vermahlprozess können handelsübliche Maschinen eingesetzt werden, wie z.B. Perlmühle, Dissolver und/oder Blattrührer.

Die Desaktivierung der Diisocyanate erfolgt in an sich bekannter Weise, siehe insbesondere EP 0 205 970 A und US-A-4 888 124, deren Inhalt hiermit in vollem Umfang durch Bezugnahme eingeschlossen ist, z.B. durch:
a) Dispergieren des pulverförmigen festen Diisocyanats in einer Lösung des Amins oder
b) Zugabe des Amins oder einer Lösung des Amins zu einer Dispersion der festen feinteiligen Diisocyanate.

Die Oberflächendesaktivierung kann dabei in Wasser und/oder aber auch in organischen Lösemitteln erfolgen.

Die wässrige Dispersion kann zudem weitere Additive enthalten, wie z.B. rheologische Hilfsmittel (Antiabsetzmittel), wie z.B. Borchi®Gel ALA (OMG Borchers GmbH) oder Kelzan® S, erhältlich bei der Firma Firma Monsanto, oder auch Tragacanth, erhältlich bei der Firma R.T. Vanderbilt, Stabilisatoren, Emulgatoren, Netz- und/oder Dispergiermittel, wie z.B. Tamol® NN 9104 der Firma BASF AG oder Aerosol® OT45 der Firma Cytec Surface Specialities GmbH, Dispersogen® HR der Firma Clariant International Ltd.

Bei der Resorcin-Formaldehyd-Latex-Dispersion im Sinne der Erfindung handelt es sich um eine Dispersion der Einzelkomponenten Resorcin und Formaldehyd und/oder Formaldehyd zusammen mit einem Vorkondensat aus Resorcin und Formaldehyd (z.B. Rhenosin® T der Firma Rhein Chemie Rheinau GmbH und Penacolite® 50 erhältlich bei der Firma Indspec Chemical Corp.) und einer oder mehreren der nachstehend genannten Latex-Dispersion.

Als Latex-Dispersion im Sinne der Erfindung kommen alle im Stand der Technik bekannten Latices in Frage, wie z.B. XSBR-Latex (carboxylierte Styrol-Butadien-Copolymere), HS-SBR-Latex (Styrol-Butadien-Copolymere), Nitril-Butadien-Copolymere (NBR-Latex), CR-Latex (Polychloropren), PSBR-Latex (Pyridin-Styrol-Butadien-Copolymere) und/oder Acrylat-Latex (Reinacrylat- und Styrol-Acrylat-Copolymere) und/oder Styrol-Butadien-Vinylpyridin-Copolymer-Latices, wobei Styrol-Butadien-Vinylpyridin-Copolymer-Latices (z.B. Pliocord VP 106, erhältlich bei der Firma Eliochem) bevorzugt sind. Dabei handelt es sich um handelsübliche Substanzen, die z.B. erhältlich sind bei der Polymer Latex GmbH oder der Firma Eliokem.

Die Resorcin-Formaldehyd-Latex-Dispersion wird dabei vorzugsweise durch Einrühren einer basischen wässrigen Mischung aus Resorcin und Formaldehyd oder vorzugsweise einer basischen wässrigen Mischung aus Formaldehyd und dem Form Vorkondensat aus Resorcin und Formaldehyd in einer basischen wässrigen Latexmischung erhalten.

Das Verhältnis von Resorcin zu Formaldehyd beträgt vorzugsweise 1:1 1 bis 2,5: 1.

Das Verhältnis von Latex zu dem Kondensat aus Resorcin und Formaldehyd , bezogen auf dessen Festkörperanteil, liegt vorzugsweise bei 10: 1 bis 4: 1, besonders bevorzugt 6:1.

Bei den eingesetzten wässrigen basischen Lösungen handelt es sich vorzugsweise um wässrige Na-Hydroxid und/oder Ammonium-Hydroxid-Lösungen. Dabei sind pH- Werte von 10 - 11 bevorzugt.

Die oberflächendesaktivierten Diisocyanate werden dabei vorzugsweise in Mengen von 0,5 bis 10 %, besonders bevorzugt 5 - 8 %, bezogen auf den Feststoffanteil in der Resorcin-Formaldehyd-Latex-Dispersion, eingesetzt.

Gegenstand der vorliegenden Erfindung ist zudem ein Verfahren zur Herstellung von wässrigen Resorcin-Formaldehyd-Latex-Dispersionen, wonach zur Oberflächendesaktivierung mindestens ein Diisocyanat nach den Formeln (I) bis (III) mit mindestens einem Amin entweder
a) durch Dispergieren mindestens eines pulverförmigen Diisocyanats nach den Formeln (I) bis (III), vorzugsweise festen Diisocyanats, in einer Lösung mindestens eines Amins oder
b) durch Zugabe mindestens eines Amins oder einer Lösung mindestens eines Amins zu einer Dispersion mindestens eines der Diisocyanate nach den Formeln (I) bis (III) hergestellt wird, und anschließend

in die Resorcin-Formaldehyd-Latex-Dispersion eingerührt oder die Resorcin-Formaldehyd-Latex-Dispersion in dieses Lösungen aus a) oder b) eingerührt wird.

Das Einrühren der desaktivierten Diisocyanate in die Resorcin-Formaldehyd-Latex-Dispersion oder der Resorcin-Formaldehyd-Latex-Dispersion in die desaktivierten Diisocyanate erfolgt dabei mit handelsüblichen Mischaggregaten, wie z.B. Rührkessel und Dispergatoren.

Gegenstand der vorliegenden Erfindung sind zudem Haftmittelformulierungen, enthaltend mindestens eine erfindungsgemäße wässrige Resorcin-Formaldehyd-Latex-Dispersion und zusätzlich ein Aktivierungsmittel.

Aktivierungsmittel im Sinne der Erfindung sind z.B. Epoxide, wie Glycidylether GE 500 der Firma Raschig, Bisphenol A Epoxynovolac der Firma Editya Birla Chemical etc..

Zur Herstellung der Haftmittelformulierungen werden dabei die Resorcin-Formaldehyd-Latex-Dispersionen mit dem oberflächendesaktivierten Diisocyanat vermischt und danach das Aktivierungsmittel zugegeben, wobei eine andere Dosierreihenfolge nicht ausgeschlossen ist.

Gegenstand der vorliegenden Erfindung ist zudem Verfahren zur Verbesserung der Haftung von Verstärkungsfasern auf vernetztem Kautschuk oder Elastomeren, wonach die Verstärkungsfasern (Fasern, Cord) in die erfindungsgemäße Haftmittelformulierung eingebracht und anschließend getrocknet werden oder

die Verstärkungsfasern (Fasern, Cord) in ein oder mehreren Schritten mit einem und/oder mehreren der Bestandteilen der erfindungsgemäßen Haftmittelformulierung behandelt wird.

Insbesondere bei der letztgenannten Behandlung in mehreren Schritten mit zunächst einem und/oder mehreren Bestandteilen der erfindungsgemäßen Haftmittelformulierung, kann die Faser zwischenzeitlich auch getrocknet werden.

Sofern das vorgenannte erfindungsgemäße Verfahren in mehreren Schritten mit einem oder mehreren Bestandteilen der erfindungsgemäßen Haftmittelformulierung durchgeführt wird, sind beispielsweise folgende Ausführungsformen möglich:
So kann beispielsweise die Verstärkungsfaser zunächst in mindestens ein Epoxid eingebracht, gegebenenfalls getrocknet, und anschließend in die Resorcin-Formaldehyd-Latex-Dispersion mit mindestens einem mit einem Amin oberflächendesaktiverten Diisocyanat der Formel (I), (II) und/oder (III) eingebracht werden oder
die Verstärkungsfaser wird zunächst in eine Dispersion aus mindestens einem Epoxid und mindestens einem mit einem Amin oberflächendesaktiverten Diisocyanat der Formel (I), (II) und/oder (III) eingebracht, gegebenenfalls getrocknet, und anschließend in eine Latex-Dispersion, die auch Resorcin und Formaldehyd oder Formaldehyd und ein Resorcin-Formaldehyd-Vorkondensat enthält, eingebracht.

Bei dem vernetzten Kautschuk oder Elastomeren handelt es sich dabei vorzugsweise um (SBR)-Styrol-Butadien-Kautschuk, (BR-) Butadien-Kautschuk, (NR-) Naturkautschuk, (IR-) synthetischer Naturkautschuk, Polyurethan-Elastomere oder Mischungen hieraus.

In den vorgenannten Fällen können sowohl voraktivierte (vorbehandelte), als auch nicht voraktivierte Verstärkungsfasern eingesetzt werden.

Bei den voraktivierten (vorbehandelten) Verstärkungsfasern handelt es sich um z.B. polyester- oder aramidbasierte Fasern, die während ihrer Herstellung (Spinnen) mit einer Schlichte behandelt wurden. Kommerziell erhältliche Produkte sind z.B. bei der Firma KoSa unter KoSa Type 793 und KoSa Type 748. Die Schlichten enthalten in vielen Fällen Epoxide.

Bei den nicht-vorbehandelten Verstärkungsfasern handelt es sich um z.B. polyester- oder aramidbasierte Fasern. Kommerziell erhältliche Produkte sind z.B. KoSa Type 792.

Ebenfalls mitumfaßt von dieser Erfindung ist auch ein Verfahren zur Verbesserung der Haftung von Verstärkungsfasern auf vernetztem Kautschuk oder Elastomeren, wonach voraktivierte (vorbehandelte) Verstärkungsfasern in die erfindungsgemäße wässrige Resorcin-Formaldehyd-Latex-Dispersion eingebracht und anschließend getrocknet werden.

Unter dem Begriff Fasern werden im Sinne der Erfindung neben Fasern auch Garne, Cords, als auch Verstärkungsgewebe verstanden, auf Basis von z.B. Polyester oder Aramid, wie u.a. Polyethylentherephthalat-basierte Fasern.

Gegenstand der vorliegenden Erfindung sind zudem haftungsverbesserte Fasern, erhältlich durch Inkontaktbringen der mit Aktivierungsmittel vorbehandelten Fasern mit mindestens einer erfindungsgemäßen wässrigen Resorcin-Formaldehyd-Latex-Dispersion oder durch Inkontaktbringen einer nicht-vorbehandelten Faser mit mindestens einer erfindungsgemäßen Haftmittelformulierung, und einer anschließenden Trocknung (Fixierung) bei Temperaturen von > 180°C.

Gegenstand der vorliegenden Erfindung ist zudem die Verwendung der erfindungsgemäßen Resorcin-Formaldehyd-Latex-Dispersion gegebenenfalls in Anwesenheit von Aktivierungsmitteln zur Verbesserung der Haftfestigkeit zwischen Verstärkungsfasern und vernetztem Kautschuk oder Elastomeren in Reifen, Antriebsriemen, Transportbändern und/oder Schläuchen.

Ein weiterer Gegenstand der Erfindung ist die Verwendung der erfindungsgemäßen Haftmittelformulierung zur Verbesserung der Haftfestigkeit zwischen Verstärkungsfasern und vernetztem Kautschuk oder Elastomeren in Reifen, Antriebsriemen, Transportbändern und/oder Schläuchen.

Die nachfolgenden Beispiele dienen der Erläuterung der Erfindung, ohne dabei limitierend zu wirken.

### Ausführungsbeispiele:

### Verwendete Chemikalien:

Addolink® TT, Diisocyanat auf Basis von Toluol-2,4-diisocyanat (TDI-Uretdion), erhältlich bei der Firma Rhein Chemie Rheinau GmbH,
Grilbond® IL 6, Caprolactamblockiertes MDI (4,4-Diphenylmethandiisocyanat), 50 %-ige Dispersion, erhältlich bei der Firma EMS-Griltech,
MDI-U, dimeres MDI (Diphenylmethan-4,4'-diisocyanat und/oder Diphenylmethan-2,4-diisocyanat), hergestellt gemäß EP 219 241 A,
Tamol®NN 9104, Netz/Dispergiermittel, erhältlich bei der Firma BASF AG,
Borchi Gel ® L 75, Antiabsetzmittel, erhältlich bei der Firma OMG Borchers GmbH,
Jeffamin® T 403, Polyetheramin , erhältlich bei der Firma Huntsman International LLC,
Verdicker Tragacanth (1 % in Wasser), erhältlich bei der Firma R.T. Vanderbilt,
Glycidylether GE 500, erhältlich bei der Firma Raschig GmbH,
Penacolite® 50, ein Resorcin-Formaldehyd-Vorkondensat, erhältlich bei der Firma Indspec Chemical Corp,
Pliocord® VP 106, ein Styrol-Butadien-Vinylpyridin-Copolymer-Latex mit 41 % Feststoffanteil, erhältlich bei der Firma Eliokem,
HMLS-Polyesterfasern sind High Modul-Low Shrinkage Polyesterfasern der Firma Polyester High Performance GmbH,
LS-Polyesterfasern sind (LS) Low Shrinkage Polyesterfasern der Firma Polyester High Performance GmbH.

Tabelle 1 fasst die Einsatzmengen zur Herstellung einer wässrigen Dispersion zusammen:

**Tabelle 1:**

| **Material** | **Bsp. 1** | **Bsp. 2** | **Bsp.3** |
|---|---|---|---|
| Addolink® TT | 100 | | |
| MDI-U | | 100 | |
| Grilbond® IL 6 | | | 100 |
| Tamol® NN 9104 | 4,4 | 4,4 | |
| Wasser | 85,6 | 85,6 | |
| Borchi Gel ® L 75 | 0,5 | 0,5 | |
| Jeffamin® T 403 | 2,0 | 2,0 | |

| | | | |
|---|---|---|---|
| Die Einsatzmengen sind in Gew. Teilen angegeben. | | | |

Die wässrigen Dispersion wurden dabei wie folgt hergestellt:
Wasser und Netz/Dispergiermittel (Tamol® NN 9104) wurden zusammengegeben und gelöst/gemischt. Anschließend wurde je nach Beispiel Addolink® TT bzw. MDI-U zugesetzt und im Dissolver homogenisiert. Anschließend wurde zur Oberflächendesaktivierung Jeffamin® T 403 zugegeben und unter Vermeidung von Scherkräften eingemischt. Danach wurde Borchi Gel ® L 75 eingemischt und homogenisiert.

Tabelle 2 gibt die Zusammensetzungen von Haftmittelformulierungen zur Behandlung von voraktivierten Polyesterfasern wieder:

**Tabelle 2:**

| **Material** | **Bsp. 4 (erf)** | **Bsp. 5 (VV)** | **Bsp. 6 (VV)** |
|---|---|---|---|
| wässrige Addolink® TT-Dispersion gemäß Bsp. 1 (oberflächendesaktiviert) | 28 | | |
| wässrige MDI-U-Dispersion gemäß Bsp. 2 (oberflächendesaktiviert) | | 28 | |
| wässrige Grilbond®IL 6-Dispersion gemäß Bsp. 3 | | | 28 |
| Wasser | 367,3 | 367,3 | 367,3 |
| Natronlauge (10 % -ig) | 6 | 6 | 6 |
| Penacolite® 50 | 42,4 | 42,4 | 42,4 |
| Formaldehyd (37 %-ig) | 20,5 | 20,5 | 20,5 |
| Pliocord VP 106 | 411 | 411 | 411 |
| Ammoniak (25 %-ig) | 24,7 | 24,7 | 24,7 |

| | | | |
|---|---|---|---|
| VV= Vergleichsbeispiel, erf= erfindungsgemäß, die Einsatzmengen sind in Gew. Teilen angegeben. | | | |

Die Vortrocknung der behandelten Fasern erfolgte bei ca. 135 °C für ca. 60 s, die Fixierung bei Temperaturen >180 °C für 120 s.

Vulkanisierung und Haftungsprüfung wurden nach ASTM D4393 durchgeführt. Als Testelastomermischung kam Dunlop SP 5320 zur Anwendung.

Es zeigte sich, dass die mit den nach dem erfindungsgemäßen Verfahren mit oberflächendesaktivierten TDI-basierten Diisocyanaten behandelten Fasern schon bei einer Fixierungstemperatur von >180°C über eine sehr gute Haftung auf vernetztem Kautschuk und Elastomeren verfügen. Im Vergleich dazu zeigen die mit caprolactamblockiertem MDI oder oberflächendesaktiviertem MDI Uretdion behandelten Fasern schlechtere Haftung.

Tabelle 3 zeigt die Ergebnisse der Haftungsprüfungen beim Einsatz von voraktivierten HMLS Polyesterfasern :

**Tabelle 3:**

| **Test*** | **Einheit** | **Beispiele** | | |
|---|---|---|---|---|
| | | **Bsp. 4 (erf)** | **Bsp. 5** | **Bsp. 6** |
| **Streifen-Test (Bedeckungsgrad)** | % | <10 | <10 | <10 |
| **Streifen-Test (Haftung)** | N/2,5cm | 310-320 | 270 - 280 | 260 - 270 |

| | | | | |
|---|---|---|---|---|
| * Fixiertemperatur 235 °C | | | | |

Tabelle 4 zeigt die Ergebnisse der Haftungsprüfungen beim Einsatz von voraktivierten LS-Polyesterfasern:

**Tabelle 4:**

| **Test*** | **Einheit** | **Beispiele** | | |
|---|---|---|---|---|
| | | **Bsp. 4 (erf)** | **Bsp. 5** | **Bsp. 6** |
| **Streifen-Test (Bedeckungsgrad)** | % | 10 bis 20 | <10 | <10 |
| **Streifen-Test (Haftung)** | N/2,5cm | 330-340 | 290 - 300 | 270 - 280 |

| | | | | |
|---|---|---|---|---|
| * Fixiertemperatur 235 °C | | | | |

Tabelle 5 zeigt die Ergebnisse der Haftungsprüfungen beim Einsatz von nicht voraktivierten HMLS-Polyesterfasern unter der Verwendung eines zweistufigen Dip-Verfahrens bzw. des Haftvermittlers im Pre-Dip:

**Tabelle 5:**

| **Test*** | **Einheit** | **Haftvermittler** | | |
|---|---|---|---|---|
| | | **Addolink ® TT** | **MDI-U** | **Grilbond® IL6** |
| **Streifen-Test (Bedeckungsgrad)** | % | <10 | <10 | <10 |
| **Streifen-Test (Haftung)** | N/2,5cm | 290 - 300 | 250 - 260 | 190 - 200 |

| | | | | |
|---|---|---|---|---|
| * Fixiertemperatur Pre-Dip: ca. 180 °C, Fixiertemperatur RFL-Dip: 235 °C | | | | |

## Patentansprüche

1. Wässrige Resorcin-Formaldehyd-Latex-Dispersion, enthaltend mindestens ein Diisocyanat
gemäß Formel (I) 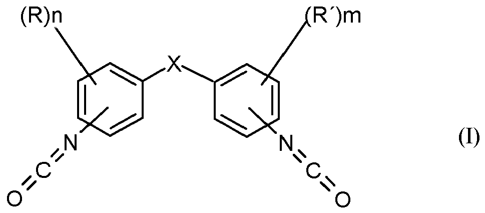 mit X= 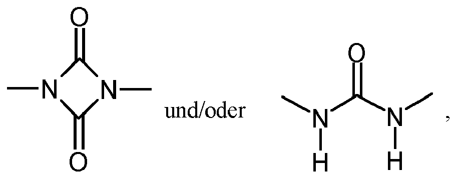 wobei n, m gleich oder verschieden sein können und 1,2,3 oder 4 entsprechen und R und R' gleich oder verschieden sein können und C₁-C₄-Alkyl bedeuten,
das mit mindestens einem Amin oberflächendesaktiviert wurde.

2. Wässrige Resorcin-Formaldehyd-Latex-Dispersion nach Anspruch 1, **dadurch gekennzeichnet, dass** es sich bei dem Diisocyanat um eine Verbindung der Formel (II) 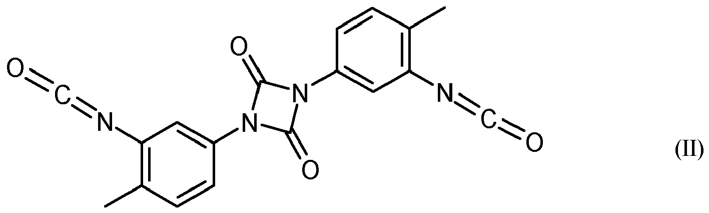 handelt, die mit mindestens einem Amin oberflächendesaktiviert wurde.

3. Wässrige Resorcin-Formaldehyd-Latex-Dispersion nach Anspruch 1 oder 2, **dadurch gekennzeichnet, dass** es sich bei dem Diisocyanat um eine Verbindung der Formel (III) 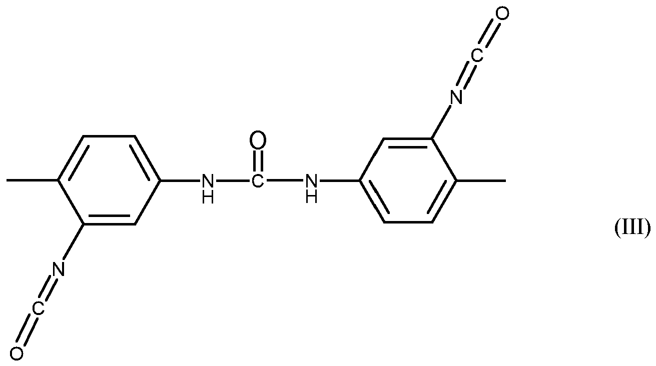 handelt, die mit mindestens einem Amin oberflächendesaktiviert wurde.

4. Wässrige Resorcin-Formaldehyd-Latex-Dispersion nach einem oder mehreren der Ansprüchen 1 bis 3, **dadurch gekennzeichnet, dass** es sich bei der Resorcin-Formaldehyd-Latex-Dispersion um eine Dispersion der Einzelkomponenten Resorcin und Formaldehyd und/oder Formaldehyd zusammen mit einem Vorkondensat aus Resorcin und Formaldehyd und einer oder mehreren der Latex-Dispersion, ausgewählt aus der Gruppe: carboxylierte Styrol-Butadien-Copolymere (XSBR-Latex), Nitril-Butadien-Copolymere (NBR-Latex), Polychloropren (CR-Latex), Pyridin-Styrol-Butadien-Copolymere (PSBR-Latex) und/oder Reinacrylat- und/oder Styrol-Acrylat-Copolymere (Acrylat-Latex) und/oder Styrol-Butadien-Vinylpyridin-Copolymer-Latices, handelt.

5. Verfahren zur Herstellung von wässrigen Resorcin-Formaldehyd-Latex-Dispersionen nach einem oder mehreren der Ansprüchen 1 bis 4, **dadurch gekennzeichnet, dass** zur Oberflächendesaktivierung mindestens ein Diisocyanat nach den Formeln (I) bis (III) mit mindestens einem Amin entweder
a) durch Dispergieren mindestens eines pulverförmigen Diisocyanats nach den Formeln (I) bis (III) in einer Lösung mindestens eines Amins oder
b) durch Zugabe mindestens eines Amins oder einer Lösung mindestens eines Amins zu einer Dispersion mindestens eines der Diisocyanate nach den Formeln (I) bis (III) hergestellt wird, und anschließend
in die Resorcin-Formaldehyd-Latex-Dispersion eingerührt oder die Resorcin-Formaldehyd-Latex-Dispersion in diese Lösungen aus a) oder b) eingerührt wird.

6. Haftmittelformulierung, enthaltend eine wässrige Resorcin-Formaldehyd-Latex-Dispersion nach einem oder mehreren der Ansprüche 1 bis 4 und zusätzlich ein Aktivierungsmittel.

7. Haftmittelformulierung nach Anspruch 6, **dadurch gekennzeichnet, dass** das Aktivierungsmittel mindestens ein Epoxid ist.

8. Verfahren zur Verbesserung der Haftung von Verstärkungsfasern auf vernetztem Kautschuk oder Elastomeren, **dadurch gekennzeichnet, dass**
- die Fasern in eine Haftmittelformulierung nach den Ansprüchen 6 oder 7 eingebracht und anschließend getrocknet werden oder
- die Fasern in ein oder mehreren Schritten mit einem und/oder mehreren der Bestandteilen der Haftmittelformulierung nach den Ansprüchen 6 oder 7 behandelt werden.

9. Verfahren zur Verbesserung der Haftung von Verstärkungsfasern auf vernetztem Kautschuk oder Elastomeren, **dadurch gekennzeichnet, dass** die voraktivierten Fasern in eine wässrige Resorcin-Formaldehyd-Latex-Dispersion nach den Ansprüchen 1 bis 4 eingebracht und anschließend getrocknet werden.

10. Haftungsverbesserte Fasern, erhältlich durch Inkontaktbringen der mit Aktivierungsmittel vorbehandelten Fasern mit mindestens einer wässrigen Resorcin-Formaldehyd-Latex-Dispersion nach einem oder mehreren der Ansprüche 1 bis 4 oder durch Inkontaktbringen einer nicht-vorbehandelten Faser mit mindestens einer Haftmittelformulierung nach Anspruch 6 oder 7 und einer anschließenden Trocknung (Fixierung) bei Temperaturen von > 180°C.

11. Verwendung der wässrige Resorcin-Formaldehyd-Latex-Dispersionen nach einem oder mehreren der Ansprüche 1 bis 4 zur Verbesserung der Haftfestigkeit zwischen Verstärkungsfasern und vernetztem Kautschuk oder Elastomeren in Reifen, Antriebsriemen, Transportbändern und/oder Schläuchen.

12. Verwendung der Haftmittelformulierung nach Anspruch 6 oder 7 zur Verbesserung der Haftfestigkeit zwischen Verstärkungsfasern und vernetztem Kautschuk oder Elastomeren in Reifen, Antriebsriemen, Transportbändern und/oder Schläuchen.
